# EUROPÄISCHE PATENTSCHRIFT

(11) **EP 4 008 947 B1**
(45) Veröffentlichungstag und Bekanntmachung des Hinweises auf die Patenterteilung: **10.04.2024**
(21) Anmeldenummer: 20211890.7
(22) Anmeldetag: 04.12.2020
(51) Int. Cl.: F16L 55/40, F16L 55/18, B08B 9/043, B08B 9/045, B08B 9/047, F16L 101/16, F16L 101/12, F16L 55/165

(54) **SONDE UND SYSTEM MIT EINER SOLCHEN SONDE**
PROBE AND SYSTEM WITH SUCH A PROBE
SONDE ET SYSTÈME POURVU D'UNE TELLE SONDE

(43) Veröffentlichungstag der Anmeldung: 08.06.2022
(73) Patentinhaber: bodus GmbH, 5000 Aarau (CH)
(72) Erfinder: Boller, Daniel, Wittnau (CH); Usul, Muarem, Oftringen (CH)
(74) Vertreter: Meissner Bolte Partnerschaft mbB

(56) Entgegenhaltungen:
- CN-A- 111 089 219
- US-A1- 2017 081 834
- US-B1- 9 683 360

## Beschreibung

Die Erfindung betrifft eine Rohr- oder Kanalsonde zur Einführung in ein Rohr oder in einen Kanal, gemäß Patentanspruch 1. Außerdem betrifft die Erfindung ein System, umfassend eine erfindungsgemäße Rohr- oder Kanalsonde.

In der Kanaltechnik sind derartige Reinigungs- und Beschichtungsgeräte bekannt, die an flexiblen Wellen angebrachte Werkzeuge, wie beispielsweise Bürsten oder Kettenschleudern, aufweisen. Die flexible Welle wird dabei durch einen außenliegenden Motor angetrieben. Diese Motoren müssen große Momente aufbringen können, um die entstehenden Reibmomente bewältigen zu können.

Die Rotation einer derartigen flexiblen Welle bedingt Vibrationen, Reibung und hohe Drehmomente, was prinzipiell das Aufbringen einer Harzschicht verschlechtert bzw. den Reinigungsvorgang erschwert.

Außerdem führen die genannten Vibrationen und Reibungen sowie die hohen Drehmomente zu einem erhöhten Verschleiß bei den bekannten Reinigungs- und Beschichtungsgeräten.

Die CN 111 089 219 A offenbart eine Vorrichtung zum Schutz der Schmierschicht von Abwasserkanälen von Schiffen.

Es ist somit Aufgabe der vorliegenden Erfindung, eine weiterentwickelte Rohr- oder Kanalsonde anzugeben, wobei die vorerwähnten Nachteile überwunden werden sollen.

Des Weiteren ist es Aufgabe der Erfindung, ein weiterentwickeltes System mit einer weiterentwickelten Rohr- oder Kanalsonde anzugeben.

Mithilfe eines weiterentwickelten Systems sowie mithilfe einer weiterentwickelten Rohr- oder Kanalsonde soll insbesondere eine Harzbeschichtung sowie eine Reinigung eines Rohrs oder eines Kanals einfacher durchführbar sein. Erfindungsgemäß wird die erläuterte Aufgabe im Hinblick auf eine Rohr- oder Kanalsonde durch den Gegenstand des Patentanspruches 1 und im Hinblick auf ein System durch den Gegenstand des Patentanspruches 13 gelöst. Die Unteransprüche umfassen mindestens zweckmäßige Ausgestaltungen und Weiterbildungen.

Konkret wird die Aufgabe durch eine Sonde nach Anspruch 1 gelöst.

Die erfindungsgemäße Rohr- oder Kanalsonde weist
- mindestens einen Motor,
- mindestens eine Motorwelle,
- mindestens ein mit der Motorwelle verbundenes Arbeitsmittel,
- eine Verbindungsvorrichtung zur Verbindung des Motors mit einem Kabel und
- mindestens eine mit einem Gehäuse verbundene Zentriervorrichtung auf.

Erfindungsgemäß wird also eine derartige Rohr- oder Kanalsonde zur Verfügung gestellt, die selbst einen Motor aufweist. Der Antrieb eines Arbeitsmittels erfolgt somit durch einen Motor, der selbst als Teil einer Rohr- oder Kanalsonde ausgebildet ist.

Als Rohr- oder Kanalsonde ist ein derartiges Bauteil zu verstehen, das in ein Rohr oder in einen Kanal eingeführt ist. Vorzugsweise ist die vollständige Rohr- oder Kanalsonde in einem Rohr oder in einem Kanal eingeführt bzw. einführbar.

Da der Motor als Teil der Rohr- oder Kanalsonde ausgebildet ist, ist es nicht notwendig, eine flexible Welle vorzusehen, die einen externen Motor mit einem Arbeitsmittel verbindet. Vielmehr erfolgt der Antrieb der Motorwelle direkt im Rohr oder im Kanal.

Es ist lediglich eine Verbindung zu einem Kabel, insbesondere einem Stromversorgungs- und/oder Datenkabel, notwendig, wobei das Kabel aus dem Rohr bzw. aus dem Kanal nach außen geführt ist. Mithilfe des Kabels findet eine elektrische Verbindung und/oder eine Datenverbindung des Motors mit einer vorzugsweise außerhalb des Rohrs oder des Kanals ausgebildeten Stromversorgungseinheit und/oder Steuereinheit statt.

Mithilfe der Zentriervorrichtung ist es möglich, die Rohr- oder Kanalsonde in einem Rohr oder in einem Kanal zu führen. Mithilfe einer Zentriervorrichtung ist es möglich, eine gleichmäßige Beschichtung und/oder eine gleichmäßige Reinigung eines Rohrs oder eines Kanals zu ermöglichen. Mithilfe einer Zentriervorrichtung kann die Rohr- oder Kanalsonde auch durch gebogene Rohre oder Kanäle geführt werden.

Die erfindungsgemäße Rohr- oder Kanalsonde wird als eine Vorrichtung zur Verfügung gestellt, die durch eine kompakte Bauweise sowie entsprechende Gruppierung einzelner Sondenbauteile einen flexiblen Einsatz in einem Rohr oder in einem Kanal ermöglicht.

Der Begriff einer Sonde, nämlich einer Rohr- oder Kanalsonde, ist derart zu interpretieren, dass die zur Sonde zugehörigen Bauteile und Bauteilabschnitte in ein Rohr oder in einen Kanal eingeführt werden. Bauteile bzw. Bauteilabschnitte, die vollständig außerhalb des Rohrs oder des Kanals verbleiben, sind nicht zur Rohr- oder Kanalsonde zuzurechnen. Bei derartigen Bauteilen oder Bauteilabschnitten handelt es sich um Bauteile eines erfindungsgemäßen Systems, das eine erfindungsgemäße Rohr- oder Kanalsonde umfasst.

Aufgrund der erfindungsgemäßen Ausbildung der Rohr- oder Kanalsonde wird eine gute Bogengängigkeit erzielt.

Bei dem Motor der Rohr- oder Kanalsonde handelt es sich erfindungsgemäß um einen Gleichstrommotor (DC). Es ist möglich, Gleichstrommotoren zu verwenden, die in Drehzahlbereichen von 0 - 2.000 rpm betrieben werden können.

Insbesondere ist eine Verbindung über ein Kabel zu einer Stromversorgung möglich, die eine 50 Hz-Stromversorgung zur Verfügung stellt. Mithilfe miniaturisierter Gleichstrommotoren ist eine Motorleistung von bis zu 200 W möglich. Mithilfe des Motors der Rohr- oder Kanalsonde kann ein Dauermoment von bis zu 250 mNm zur Verfügung gestellt werden.

Die erfindungsgemäße Rohr- oder Kanalsonde weist eine Zentriervorrichtung auf, die mit einem Gehäuse verbunden ist. Bei dem Gehäuse handelt es sich um ein Gehäuse der Rohr- oder Kanalsonde. Des Weiteren ist es möglich, dass das Gehäuse ein Gehäuse oder ein Gehäuseabschnitt des Motors ist.

Vorzugsweise ist der Motor zusammen mit einem Motorgehäuse in dem Gehäuse der Rohr- oder Kanalsonde positioniert. Mit anderen Worten kann ein Motorgehäuse zumindest abschnittsweise von dem Gehäuse der Rohr- oder Kanalsonde umgeben sein.

Die Zentriervorrichtung ist durch mehrere federnde Elemente gebildet.

Erfindungsgemäß sind die federnden Elemente gleichmäßig in Umfangsrichtung des Gehäuses beabstandet angeordnet. Aufgrund der Ausbildung federnder Elemente ist es möglich, Unregelmäßigkeiten bzgl. Rohr- oder Kanaldurchmessern auszugleichen. Des Weiteren können Biegeabschnitte in Rohren und/oder Kanälen besser überwunden werden. Die federnden Elemente einer Zentriervorrichtung dienen vorzugsweise zur Anpassung der Zentriervorrichtung an unterschiedliche Durchmesser in Rohren und/oder Kanälen.

Erfindungsgemäß sind die federnden Elemente turbinenschaufelartig ausgebildet.

Als turbinenschaufelartig ausgebildete federnde Elemente sind derartige Elemente zu verstehen, die gebogen ausgebildet sind. Vorzugsweise weisen alle federnden Elemente bei einer derartigen Ausbildung der Erfindung in einem drucklosen Zustand einen gleichen Biegungsradius auf, wobei die federnden Elemente vorzugsweise aus einem derartigen Material gebildet sind, sodass der Biegeradius der federnden Elemente, die turbinenschaufelartig ausgebildet sind, in Abhängigkeit des Innendurchmessers des Rohrs und/oder des Kanals angepasst werden.

Die turbinenschaufelartig ausgebildeten federnden Elemente können in Abhängigkeit des Innendurchmessers des Rohrs und/oder des Kanals stärker in Richtung der Mittelachse der Rohr- oder Kanalsonde angedrückt werden, so dass die turbinenschaufelartig ausgebildeten federnden Elemente insgesamt einen geringeren Außendurchmesser aufweisen. Sofern kein Druck mehr oder ein verringerter Druck auf die turbinenschaufelartig ausgebildeten federnden Elemente wirkt, können die federnden Elemente aufgrund der Entspannung nach außen, d. h. von der Mittelachse der Rohr- oder Kanalsonde wegweisend bewegt werden. Mit anderen Worten können die federnden Elemente aufgrund einer Rückstellkraft nach Verringerung eines entsprechenden Drucks auf die federnden Elemente in eine Ausgangsposition zurückgestellt werden, wobei die Ausgangsposition einen größeren Außendurchmesser aller federnden Elemente bzw. der Zentriervorrichtung bewirkt.

In einer weiteren Ausführungsform der Erfindung ist es möglich, dass die federnden Elemente auf einer Zentriervorrichtungsbasis angeordnet sind. Die Zentriervorrichtungsbasis kann als Bauteil oder Abschnitt der Zentriervorrichtung ausgebildet sein.

Vorzugsweise ist die Zentriervorrichtungsbasis ringförmig ausgebildet. Die Zentriervorrichtungsbasis kann insbesondere als ein derartiger Ring ausgebildet sein, der auf das Gehäuse der Rohr- oder Kanalsonde aufgeschoben ist oder zumindest einen Abschnitt des Gehäuses der Rohr- oder Kanalsonde bildet. Des Weiteren ist es möglich, dass der Motor (optional mit einem Motorgehäuse) in einer ringförmigen Zentriervorrichtungsbasis befindlich oder positioniert ist.

Die Zentriervorrichtung kann in einer weiteren Ausführungsform der Erfindung gebogene Arme aufweisen. Die gebogenen Arme sind vorzugsweise in die gleiche Richtung gebogen. Die gebogenen Arme sind vorzugsweise derart flexibel ausgebildet, dass der Außendurchmesser der Zentriervorrichtung, der durch die gebogenen Arme gebildet wird, in Abhängigkeit der Position der gebogenen Arme vergrößert oder verkleinert werden kann.

Das Arbeitsmittel der Rohr- oder Kanalsonde kann beispielsweise eine Applikationsvorrichtung sein. Beispielsweise kann das Arbeitsmittel eine Applikationsbürste sein. Mithilfe einer derartigen Applikationsvorrichtung, insbesondere mithilfe einer Applikationsbürste, ist es möglich, ein Mittel, insbesondere eine Harz-Härter-Mischung, gleichmäßig auf die Innenseite eines Rohrs und/oder Kanals, oder auf die Innenseite eines Verstärkungs- bzw. Reparationsschlauches (Liner) auftragen zu können. Mithilfe einer Applikationsvorrichtung, insbesondere mithilfe einer Applikationsbürste, kann ein Harz-Härter-Gemisch besonders gleichmäßig aufgetragen werden. Dies ist darauf zurückzuführen, dass das Arbeitsmittel direkt oder indirekt mit der Motorwelle des Motors verbunden ist und somit gedreht wird.

Des Weiteren ist es möglich, dass das Arbeitsmittel eine Reinigungsvorrichtung ist. Mithilfe derartiger Reinigungsvorrichtungen können Verunreinigungen in einem Rohr und/oder einem Kanal beseitigt werden. Bei der Reinigungsvorrichtung kann es sich um einen Bürstenkopf und/oder eine Schleifpapier-Anordnung und/oder eine Kettenschleuder und/oder einen Blattbohrer und/oder einen Schaufelblattbohrer und/oder einen Schneidkopf und/oder einen Fräskopf handeln.

Das Arbeitsmittel kann direkt mit der Motorwelle verbunden sein. Des Weiteren ist es möglich, dass das Arbeitsmittel indirekt mit der Motorwelle verbunden ist.

Eine indirekte Verbindung mit der Motorwelle ist beispielsweise mittels eines Gelenks, insbesondere eines Kugelgelenks, möglich. Ein derartiges Kugelgelenk kann zwischen der Motorwelle und dem Arbeitsmittel ausgebildet sein.

Eine weitere Möglichkeit hinsichtlich einer indirekten Verbindung eines Arbeitsmittels mit der Motorwelle betrifft die indirekte Verbindung mittels einer Feder. Vorzugsweise handelt es sich bei einer derartigen Feder um eine Metallfeder, die ausreichend lang ausgebildet ist, so dass die Rohr- oder Kanalsonde zusammen mit dem befestigten Arbeitsmittel auch durch gebogene Rohr- oder Kanalabschnitte geführt werden kann. Bei der Feder handelt es sich vorzugsweise um eine Spiralfeder.

Insbesondere können die Mittel zur indirekten Verbindung des Arbeitsmittels mit der Motorwelle derart ausgebildet sein, dass das Arbeitsmittel einfach austauschbar ist. Dies ermöglicht es, die Rohr- oder Kanalsonde mit verschiedenen Arbeitsmitteln verwenden zu können. Das Mittel zur indirekten Verbindung des Arbeitsmittels mit der Motorwelle kann als Schnellverbinder ausgebildet sein.

Eine Möglichkeit hinsichtlich des Ausbildens einer Zentriervorrichtungsbasis, insbesondere einer ringförmigen Zentriervorrichtungsbasis, besteht darin, dass die Zentriervorrichtungsbasis austauschbar an der Rohr- oder Kanalsonde angebracht werden kann. Insbesondere kann die Zentriervorrichtungsbasis austauschbar am Gehäuse ausgebildet sein.

Es ist möglich, dass die Form, insbesondere der Durchmesser der Zentriervorrichtungsbasis an den jeweiligen Durchmesser des zu bearbeitenden Rohrs oder Kanals anpassbar ist. Hierzu können mehrere Zentriervorrichtungsbasen in einem Set zur Verfügung gestellt werden, so dass im Hinblick auf unterschiedliche Innendurchmesser von Rohren oder Kanälen eine Anpassung hinsichtlich der Abmaße bzw. Dimension der Zentriervorrichtung, insbesondere der Zentrierbasis, möglich ist.

Bei der Verbindungsvorrichtung zur Verbindung des Motors mit einem Kabel kann es sich beispielsweise um einen Steckverbinder oder um ein Gelenk oder um eine Spiralfeder mit Anschlussstück handeln. Bei Ausbildung eines Gelenks kann es sich insbesondere um ein Kugelgelenk handeln. Das Ausbilden einer Verbindungsvorrichtung ist insbesondere dann notwendig oder vorteilhaft, sofern es sich bei dem mit der Rohr- oder Kanalsonde zu verbindenden Kabel um ein Schiebekabel handelt.

Sofern die Verbindungsvorrichtung als Spiralfeder ausgebildet ist, wird der Vorteil erzielt, dass das Kabel geschützt werden kann und die Verbindungsvorrichtung sehr flexibel ist. Das Ausbilden eines Gelenks, insbesondere eines Kugelgelenks, hat den Vorteil, dass ein derartiges Gelenk nahezu frei bewegbar ist. Außerdem ist eine Verbindungsvorrichtung bei einer derartigen Ausführungsform der Erfindung äußerst stabil.

Es ist möglich, dass die Rohr- oder Kanalsonde einen Temperatursensor aufweist. Mithilfe eines derartigen Temperatursensors kann beispielsweise der Vernetzungsgrad eines aufgetragenen Harz-Härter-Gemisches detektiert werden.

Des Weiteren ist es möglich, dass die Rohr- oder Kanalsonde eine Kamera aufweist. Mithilfe einer derartigen Kamera ist es möglich, das Rohr oder den Kanal hinsichtlich eines etwaigen Verschmutzungsgrades zu untersuchen. Außerdem ist es mithilfe einer Kamera möglich, das Ergebnis eines Beschichtungsvorganges zu überprüfen.

Die Rohr- oder Kanalsonde kann des Weiteren einen Mischer, insbesondere einen Statomischer, aufweisen. Dieser Mischer, insbesondere der Statomischer, kann vorzugsweise an der Zentriervorrichtung befestigt sein. Ein derartiger Mischer bzw. Statomischer dient insbesondere zur Mischung eines Harzes mit einem Härter. Die Mischung des Harzes mit dem Härter erfolgt vorzugsweise kurz vor dem Auftrag des Gemisches auf das Rohr, so dass die Mischung in baulicher Umgebung der Rohr- oder Kanalsonde, und eben nicht außerhalb des Rohres oder des Kanals erfolgt.

Aufgrund der Ausbildung der erfindungsgemäßen Rohr- oder Kanalsonde ist es möglich, auf zwei nachteilige Bauteile bzw. Elemente bekannter Reinigungs- und Beschichtungsgeräte zu verzichten. Bei diesen Bauteilen handelt es sich zum einen um die flexible Welle bzw. Antriebswelle. Zum anderen handelt es sich um einen bislang notwendigen großen Wechselstrommotor. Aufgrund der kompakten Ausbildung der erfindungsgemäßen Rohr- oder Kanalsonde ist es erstmals möglich, sowohl einen Reinigungsvorgang als auch einen Beschichtungsvorgang mit einer derartigen Vorrichtung durchzuführen, die ohne Verwendung eines großen Wechselstrommotors (AC) betreibbar ist.

Der zu verwendende Gleichstrommotor weist vorzugsweise ein maximales Kurzzeitdrehmoment von 245 mNm auf.

Es ist möglich, dass zur Abdichtung des Motors die Motorwelle und/oder das Gehäuse des Motors und/oder das Gehäuse der Rohr- oder Kanalsonde mittels einer Dichtung, insbesondere mittels eines Dichtrings, besonders bevorzugt mittels eines Wellendichtrings, abgedichtet ist. Somit wird verhindert, dass ein aufzutragendes Mittel, insbesondere ein im Rohr aufzutragendes Harz-Härter-Gemisch, in die Rohr- oder Kanalsonde bzw. in den Motor eindringen kann.

Ein Wellendichtring ist besonders günstig herzustellen und kann platzsparend in der Rohr- oder Kanalsonde platziert und verbaut werden.

Der Wellendichtring ist vorzugsweise zwischen der Motorwelle und dem Gehäuse ausgebildet. Die Dichtung, insbesondere der Wellendichtring, ist derart konstruiert und im Gehäuse montiert, dass die Dichtung, insbesondere der Wellendichtring, möglichst einfach auswechselbar ist.

In einer weiteren Ausführungsform der Erfindung kann die Rohr- oder Kanalsonde eine Temperaturregeleinheit aufweisen. Mithilfe der Temperaturregeleinheit kann die Temperatur in der Rohr- oder Kanalsonde geregelt werden, so dass die Eigenschaften, insbesondere die Viskosität, eines aufzutragenden Mittels, insbesondere eines aufzutragenden Harz-Härter-Gemisches, eingestellt werden kann.

Das Gehäuse ist im Wesentlichen kapselförmig ausgebildet. Die Kapselform wird beispielsweise durch einen Dichtdeckel (bzw. eine Dichtungskappe), einen zylindrischen Abschnitt sowie einen Kabelanschluss gebildet. Der Dichtdeckel (Dichtungskappe) dient insbesondere dazu, einen Wellendichtring austauschbar im Gehäuse anordnen zu können.

Sofern die federnden Elemente turbinenschaufelartig ausgebildet sind, sind die federnden Elemente hinsichtlich der Breite vorzugsweise über die Längserstreckung nicht gleichbleibend ausgebildet. Vielmehr ist vorzugsweise eine derartige Form der turbinenschaufelartig federnden Elemente ausgebildet, die in einer Seitenansicht eine konvexe Form bilden.

Vorzugsweise weist die Zentriervorrichtung eine derartige Ausnehmung, insbesondere eine Aussparung, auf, so dass ein Mischer, insbesondere ein Statomischer, an der Zentriervorrichtung befestigt, insbesondere klemmend fixiert, werden kann.

Ein weiterer Aspekt der Erfindung betrifft ein System, umfassend eine erfindungsgemäße Rohr- oder Kanalsonde sowie ein Kabel. Bei dem Kabel handelt es sich insbesondere um ein Schiebekabel. Des Weiteren umfasst das System eine Haspel, in der das Kabel, insbesondere das Schiebekabel, gelagert ist.

Des Weiteren umfasst das System vorzugsweise eine Steuereinheit und/oder eine Stromversorgungseinheit, die vorzugsweise in oder an einem Gehäuse der Haspel angeordnet ist/sind.

Mithilfe des erfindungsgemäßen Systems sind im Wesentlichen die gleichen Vorteile erzielbar, wie diese im Zusammenhang mit der erfindungsgemäßen Rohr- oder Kanalsonde angegeben sind.

Die Erfindung wird nachstehend mit weiteren Einzelheiten unter Bezug auf die beigefügten Zeichnungen näher erläutert.

In diesen zeigen:
- Fig. 1a-1c: verschiedene Darstellungen hinsichtlich einer möglichen erfindungsgemäßen Ausführungsform einer Rohr- oder Kanalsonde;
- Fig. 2: eine Längsschnittdarstellung durch die erfindungsgemäße Rohr- oder Kanalsonde gemäß Fig. 1a-1c;
- Fig. 3: ein erfindungsgemäßes System mit Darstellung möglicher Arbeitsmittel; und
- Fig. 4: eine Darstellung des erfindungsgemäßen Systems mit einer in einem Rohr eingeführten erfindungsgemäßen Rohr- oder Kanalsonde.

Im Folgenden werden für gleiche und gleich wirkende Teile dieselben Bezugsziffern verwendet.

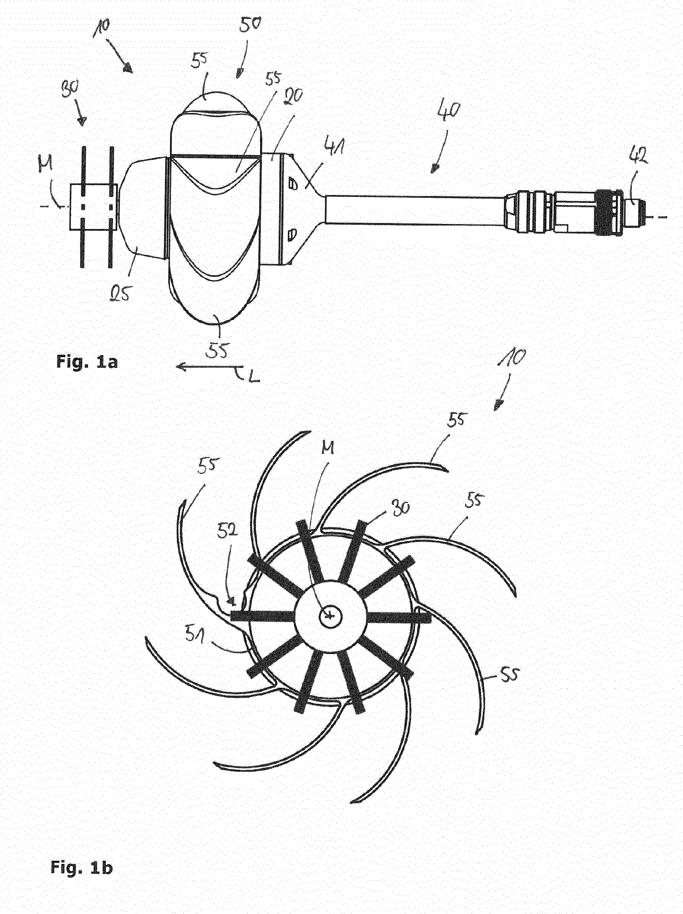

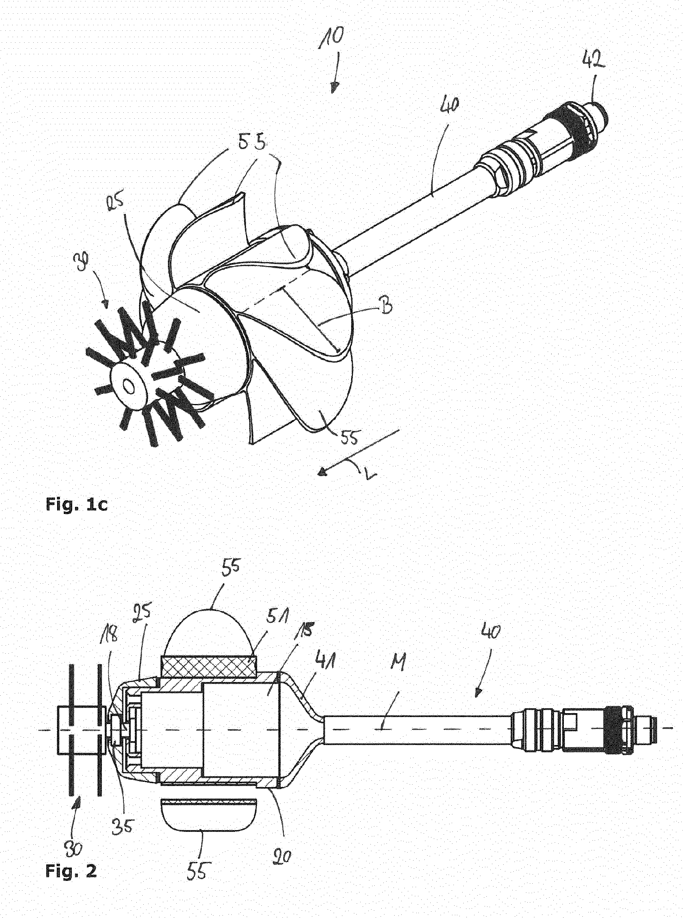

Die Fig. 1a-1c sowie Fig. 2 zeigen den prinzipiellen Aufbau einer möglichen Ausführungsform einer Rohr- oder Kanalsonde 10.

In Fig. 1a ist eine Seitendarstellung der Rohr- oder Kanalsonde dargestellt. In Fig. 1b ist eine Vorderansicht der Rohr- oder Kanalsonde dargestellt. Die Fig. 1c zeigt eine perspektivische Ansicht auf die erfindungsgemäße Rohr- oder Kanalsonde 10. Fig. 2 zeigt eine Längsschnittdarstellung durch die erfindungsgemäße Rohr- oder Kanalsonde gemäß Fig. 1a-1c.

Die Rohr- oder Kanalsonde 10 weist einen Motor 15 (siehe Fig. 2) auf. Der Motor 15 weist selbst ein Motorgehäuse auf und befindet sich in einem Gehäuse 20. Im Gehäuse 20 ist mit anderen Worten unter anderem der Motor 15 gelagert.

Bei dem Motor 15 handelt es sich um einen Gleichstrommotor. Das Zur-Verfügung-Stellen eines separaten Wechselstrommotors ist aufgrund der erfindungsgemäßen Ausbildung der Rohr- oder Kanalsonde 10 nicht mehr notwendig.

Der Motor 15 weist außerdem eine Motorwelle 18 auf (siehe Fig. 2). Mit der Motorwelle 18 ist ein Arbeitsmittel 30 direkt verbunden.

Des Weiteren ist eine Verbindungsvorrichtung 40 dargestellt.

Die Verbindungsvorrichtung 40 dient zur Verbindung des Motors 15 mit einem Kabel (hier nicht dargestellt). Ein Teil der Verbindungsvorrichtung 40, insbesondere der kappenförmige Teil 41 der Verbindungsvorrichtung 40, kann einen Teil des kapselförmigen Gehäuses 20 bilden. Das weitere Ende der Verbindungsvorrichtung 40 dient mittels eines Anschlussstückes 42 zur Verbindung mit dem angedeuteten Kabel.

Auf dem Gehäuse 20 bzw. das Gehäuse 20 abschnittsweise umschließend, ist eine Zentriervorrichtungsbasis 51 einer Zentriervorrichtung 50 ausgebildet. Die Zentriervorrichtungsbasis 51 ist als ringförmiger Abschnitt ausgebildet. An der Zentriervorrichtungsbasis 51 sind mehrere federnde Elemente 55 ausgebildet. Die federnden Elemente 55 sind, wie dies in Fig. 1b dargestellt ist, in Umfangsrichtung des Gehäuses 20 gleichmäßig beabstandet zueinander angeordnet.

Die Zentriervorrichtungsbasis 51 kann austauschbar am Gehäuse 20 angeordnet sein. Es ist möglich, dass unterschiedliche Zentriervorrichtungen 50 auf dem Gehäuse 20 angebracht werden können. So ist es möglich, dass abhängig vom Rohr- bzw. Kanalinnendurchmesser unterschiedliche Zentriervorrichtungen 50 auf das Gehäuse 20 aufgeschoben und mit dem Gehäuse 20 verbunden werden können.

Es sind acht federnde Elemente 55 (siehe Fig. 1b) ausgebildet, die turbinenschaufelartig ausgebildet sind. Die Elemente 55 sind vorzugsweise aus einem Kunststoffmaterial gebildet, so dass der Biegungsradius der federnden Elemente 55 verkleinert oder vergrößert werden kann. Bei Einführen der Rohr- oder Kanalsonde 10 in ein Rohr, können die federnden Elemente 55 in Richtung der Mittelachse M gebogen werden, so dass der Außendurchmesser der Zentriervorrichtung 50 verkleinert werden kann.

Die federnden Elemente 55 weisen in Richtung der Längserstreckung L keine gleichbleibende Breite B auf. Vielmehr ist das federnde Element 55 derart ausgebildet, dass eine Art konvexe Fläche ausgebildet ist. Dies ermöglicht zum einen eine gute Zentrierung der Rohr- oder Kanalsonde 10 in einem Rohr, und zum anderen eine gute Bogengängigkeit.

Das Gehäuse 20 weist einen Dichtungsdeckel bzw. eine Dichtungskappe 25 auf. Diese Dichtungskappe 25 ist im Bereich der Motorwelle 18 ausgebildet. In der Dichtungskappe 25 ist eine Dichtung 35 ausgebildet. Mithilfe der Dichtung 35 wird verhindert, dass ein Mittel, insbesondere ein Harz-Härter-Gemisch oder andere Flüssigkeiten, in der Motor 15 eindringen kann.

Die Dichtung 35 ist vorliegend als Wellendichtring ausgebildet. Mithilfe eines Wellendichtrings kann das Eindringen von Flüssigkeit in das Gehäuse 20, insbesondere in den Motor 15 nachweislich verhindert werden.

Vorzugsweise ist die Dichtungskappe 25 am restlichen Gehäuse 20 derart befestigt, dass die Dichtung 35 erneuert bzw. gewechselt werden kann. Beispielsweise ist die Dichtungskappe 25 auf einen weiteren Abschnitt des Gehäuses 20 aufgeschraubt.

Bei dem dargestellten Arbeitsmittel 30 handelt es sich um eine Applikationsvorrichtung, nämlich um eine Applikationsbürste. Mithilfe einer derartigen Applikationsbürste kann ein Mittel, insbesondere ein Harz-Härter-Gemisch auf ein Rohr, insbesondere auf einen in einem Rohr befindlichen Liner gleichmäßig aufgetragen werden.

Das dargestellte Arbeitsmittel 30 bzw. die Applikationsbürste, ist direkt mit der Motorwelle 18 verbunden. Es ist möglich, dass ein Arbeitsmittel, beispielsweise auch die Applikationsbürste indirekt auch mit der Motorwelle 18 verbunden ist. Hierzu eignen sich besonders Federn, insbesondere Spiralfedern.

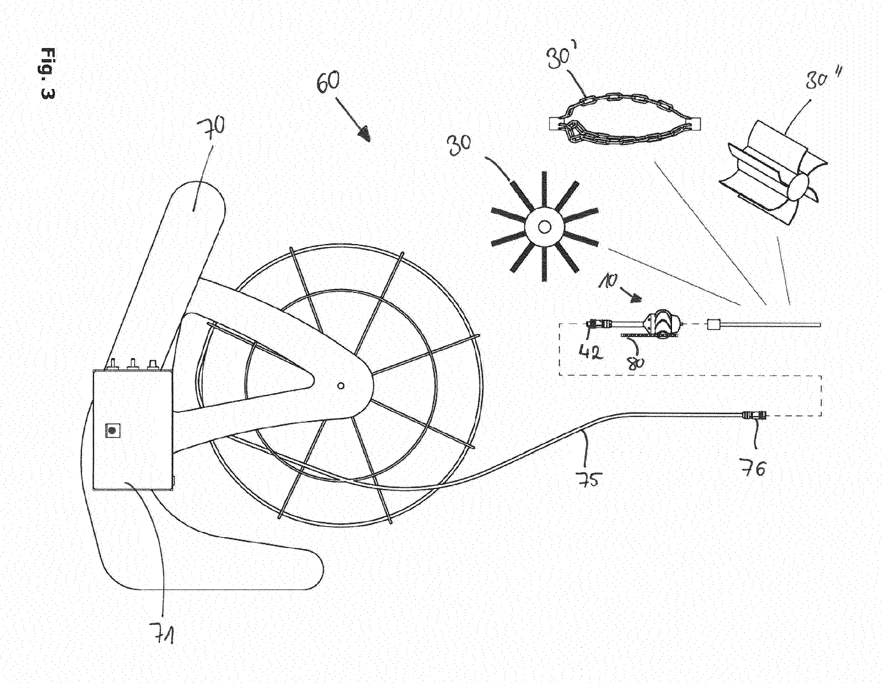

In Fig. 1b ist des Weiteren eines Ausnehmung 52 zu erkennen. Diese Ausnehmung 52 dient zur Anbringung, insbesondere zur klemmenden Fixierung, eines Statomischers (siehe Fig. 3).

In Fig. 3 ist ein erfindungsgemäßes System 60 dargestellt. Das System 60 weist eine erfindungsgemäße Rohr- oder Kanalsonde 10 auf. Des Weiteren ist eine Haspel 70 dargestellt. Die Haspel 70 dient zur Lagerung des Kabels 75 bzw. des Schiebekabels. Das System 60 umfasst des Weiteren eine Steuereinheit 71. Mithilfe dieser Steuereinheit 71 kann der Motor der Rohr- oder Kanalsonde 10 entsprechend gesteuert werden.

Ebenfalls zu erkennen ist ein Statomischer 80, der mit der Zentriervorrichtung 50 der Rohr- oder Kanalsonde 10 verbunden ist. Demnach kann mithilfe der Zentriervorrichtung 50 der Statomischer 80 exakt an einer zu bearbeitenden bzw. zu beschichtenden Position in einem Rohr verfahren bzw. transportiert werden.

Die Verbindung des Kabels 75 mit der Rohr- oder Kanalsonde 10 erfolgt mit Hilfe der Verbindungsvorrichtung 40. Ein Anschlussstück 76 des Kabels 75 wird mit Anschlussstück 42 der Verbindungsvorrichtung 40 verbunden. Die beiden Anschlussstücke 42 und 76 bilden eine Art Schnellverbinder.

In Fig. 3 sind alternative Ausführungsformen hinsichtlich des Arbeitsmittels 30 dargestellt. Beim Arbeitsmittel 30 handelt es sich um eine Applikationsbürste.

Das Arbeitsmittel 30' ist eine Reinigungsvorrichtung, nämlich eine Kettenschleuder. Das Arbeitsmittel 30" ist ebenfalls eine Reinigungsvorrichtung in Form einer Schleifpapieranordnung.

Die dargestellten Arbeitsmittel können, wie dies in Fig. 3 angedeutet ist, variabel ausgetauscht werden. Diesbezüglich kann eine direkte Befestigung an der Motorwelle 18 oder eine indirekte Befestigung vorgesehen sein. Die Arbeitsmittel 30, 30' und 30" weisen diesbezüglich entsprechende Befestigungsvorrichtungen auf.

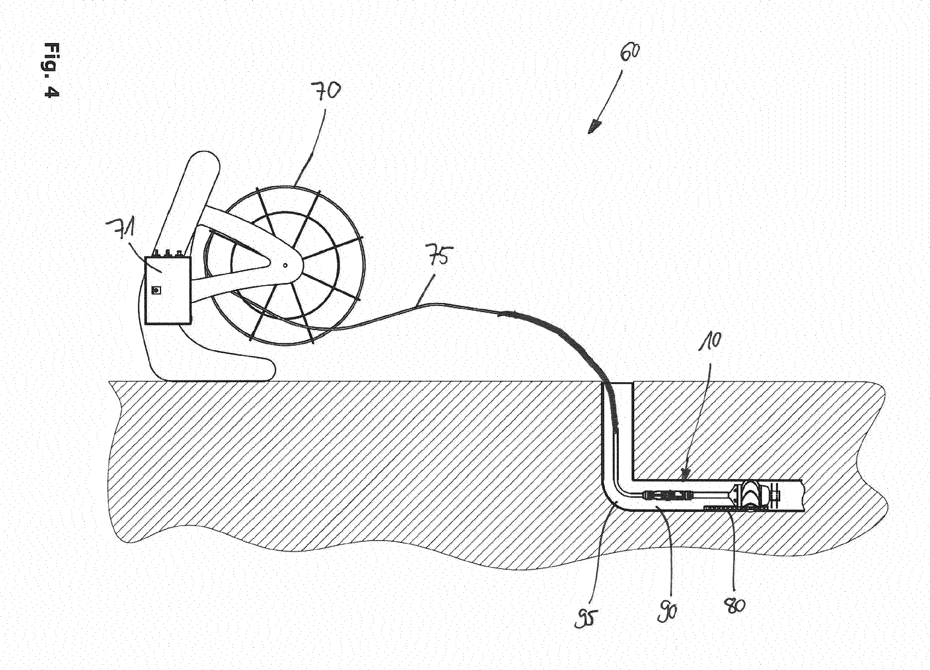

In Fig. 4 ist ebenfalls das erfindungsgemäße System 60 dargestellt. Anhand dieser Darstellung ist klar, welche Bauteile des Systems tatsächlich als zur Rohr- oder Kanalsonde 10 zugehörig ausgebildet sind. Das Kabel 75 ist vorzugsweise nicht als zum System 60 zugehörig zu bezeichnen. Das Kabel 75 befindet sich nämlich nicht vollständig im Rohr 90.

Es ist zu erkennen, dass aufgrund der erfindungsgemäßen Ausbildung der Rohr- oder Kanalsonde 10 ein Transport im Rohr 90 möglich ist, der unter anderem auch 90°-Biegungsabschnitte 95 aufweist.

### Bezugszeichen

- 10: Rohr- oder Kanalsonde
- 15: Motor
- 18: Motorwelle
- 20: Gehäuse
- 25: Dichtungskappe
- 30, 30', 30": Arbeitsmittel
- 35: Dichtung
- 40: Verbindungsvorrichtung
- 41: kappenförmiger Teil
- 42: Anschlussstück
- 50: Zentriervorrichtung
- 51: Zentriervorrichtungsbasis
- 55: federndes Element
- 60: System
- 70: Haspel
- 71: Steuereinheit
- 75: Kabel
- 76: Anschlussstück
- 80: Statomischer
- 90: Kanal
- 95: Biegungsabschnitt
- M: Mittelachse
- L: Längserstreckung
- B: Breite

## Patentansprüche

1. Sonde (10) zur Einführung in ein Rohr (90) oder in einen Kanal, wobei die Sonde (10)
- mindestens einen Motor (15),
- mindestens eine Motorwelle (18),
- mindestens ein mit der Motorwelle (18) verbundenes Arbeitsmittel (30, 30', 30"),
- eine Verbindungsvorrichtung (40) zur Verbindung des Motors (15) mit einem Kabel (75),
- mindestens ein Gehäuse (20), und
- mindestens eine mit dem Gehäuse (20) verbundene Zentriervorrichtung (50) aufweist, wobei sich der Motor (15) in dem Gehäuse (20) befindet und ein Gleichstrommotor ist,
**dadurch gekennzeichnet, dass**
die Zentriervorrichtung (50) durch mehrere federnde Elemente (55), die in Umfangsrichtung des Gehäuses (20) gleichmäßig beabstandet angeordnet sind, gebildet ist, wobei die federnden Elemente (55) turbinenschaufelartig ausgebildet sind.

2. Sonde (10) nach Anspruch 1,
**dadurch gekennzeichnet, dass**
die federnden Elemente (55) auf einer Zentriervorrichtungsbasis (51), die insbesondere ringförmig ausgebildet ist, angeordnet sind.

3. Sonde (10) nach einem der vorangegangenen Ansprüche,
**dadurch gekennzeichnet, dass**
die Zentriervorrichtung (50) gebogene Arme aufweist.

4. Sonde (10) nach einem der vorangegangenen Ansprüche,
**dadurch gekennzeichnet, dass**
das Arbeitsmittel (30) eine Applikationsvorrichtung, insbesondere eine Applikationsbürste, ist.

5. Sonde () nach einem der vorangegangenen Ansprüche,
**dadurch gekennzeichnet, dass**
das Arbeitsmittel (30', 30") eine Reinigungsvorrichtung, insbesondere ein Bürstenkopf oder eine Schleifpapier-Anordnung oder eine Kettenschleuder oder ein Blattbohrer oder ein Schaufelblattbohrer oder ein Schneidkopf oder ein Fräskopf, ist.

6. Sonde (10) nach einem der vorangegangenen Ansprüche,
**dadurch gekennzeichnet, dass**
das Arbeitsmittel (30, 30', 30") direkt mit der Motorwelle (18) oder indirekt mittels eines Gelenks, insbesondere eines Kugelgelenks, oder mittels einer Feder mit der Motorwelle (18) verbunden ist.

7. Sonde (10) nach einem der vorangegangenen Ansprüche,
**dadurch gekennzeichnet, dass**
die Verbindungsvorrichtung (40) als Steckverbinder oder als Spiralfeder mit Anschlussstück oder als Gelenk, insbesondere als Kugelgelenk, ausgebildet ist.

8. Sonde (10) nach einem der vorangegangenen Ansprüche,
**dadurch gekennzeichnet, dass**
die Sonde (10) einen Temperatursensor und/oder eine Kamera umfasst.

9. Sonde (10) nach einem der vorangegangenen Ansprüche,
**dadurch gekennzeichnet, dass**
die Sonde (10) einen Statomischer (80), der vorzugsweise an der Zentriervorrichtung (50) befestigt ist, umfasst.

10. System (60) umfassend eine Sonde (10) nach einem der Ansprüche 1 bis 9 und ein Kabel (75).

11. System (60) nach Anspruch 10,
**dadurch gekennzeichnet, dass**
das System (60) eine Haspel (70), in der das Kabel (75), insbesondere ein Schiebekabel, gelagert ist, umfasst.

12. System (60) nach Anspruch 10 oder 11,
**dadurch gekennzeichnet, dass**
das System (60) eine Steuereinheit (71), die vorzugsweise in oder an einem Gehäuse der Haspel (70) angeordnet ist, umfasst.

## Claims

1. A probe (10) for insertion into a pipe (90) or into a duct, wherein
the probe (10) has
- at least one motor (15),
- at least one motor shaft (18),
- at least one working means (30, 30', 30") connected to the motor shaft (18),
- a connecting device (40) for connecting the motor (15) to a cable (75),
- at least one housing (20), and
- at least one centering device (50) connected to the housing (20), wherein
the motor (15) is located in the housing (20) and is a DC motor,
**characterized in that**
the centering device (50) is formed by a plurality of springy elements (55) which are arranged uniformly spaced apart in the circumferential direction of the housing (20), wherein the springy elements (55) are of a turbine-blade design.

2. The probe (10) according to claim 1,
**characterized in that**
the springy elements (55) are arranged on a centering device base (51), which is formed more particularly in an annular shape.

3. The probe (10) according to any one of the preceding claims,
**characterized in that**
the centering device (50) has curved arms.

4. The probe (10) according to any one of the preceding claims,
**characterized in that**
the working means (30) is an application device, in particular an application brush.

5. The probe (10) according to any of the preceding claims,
**characterized in that**
the working means (30', 30") is a cleaning device, more particularly a brush head or an abrasive paper assembly or a chain slinger or a blade drill or a shovel blade drill or a cutting head or a milling head.

6. The probe (10) according to any one of the preceding claims,
**characterized in that**
the working means (30, 30', 30") is connected directly to the motor shaft (18) or indirectly to the motor shaft (18) by means of a joint, in particular a ball joint, or by means of a spring.

7. The probe (10) according to any one of the preceding claims,
**characterized in that**
the connecting device (40) is designed as a plug connector or as a spiral spring with connecting piece or as a joint, in particular as a ball joint.

8. The probe (10) according to any one of the preceding claims,
**characterized in that**
the probe (10) comprises a temperature sensor and/or a camera.

9. The probe (10) according to any one of the preceding claims,
**characterized in that**
the probe (10) comprises a statomixer (80), which is preferably attached to the centering device (50).

10. A system (60), comprising a probe (10) according to any one of the claims 1 to 9 and a cable (75).

11. The system (60) according to claim 10,
**characterized in that**
the system (60) comprises a reel (70) in which the cable (75), in particular a push cable, is stored.

12. The system (60) according to claim 10 or 11,
**characterized in that**
the system (60) comprises a control unit (71), which is preferably arranged in or on a housing of the reel (70).

## Revendications

1. Sonde (10) destinée à être introduite dans un tube (90) ou dans un canal, la sonde (10) comprenant
- au moins un moteur (15),
- au moins un arbre moteur (18),
- au moins un moyen de travail (30, 30', 30") relié à l'arbre moteur (18),
- un dispositif de connexion (40) destiné à connecter le moteur (15) à un câble (75),
- au moins un boîtier (20), et
- au moins un dispositif de centrage (50) relié au boîtier (20),
le moteur (15) étant situé dans le boîtier (20) et étant un moteur à courant continu,
**caractérisée en ce que**
le dispositif de centrage (50) est formé par une pluralité d'éléments élastiques (55) qui sont espacés régulièrement dans la direction circonférentielle du boîtier (20), les éléments élastiques (55) étant en forme d'aubes de turbine.

2. Sonde (10) selon la revendication 1,
**caractérisée en ce que**
les éléments élastiques (55) sont disposés sur une base de dispositif de centrage (51) qui est en particulier de forme annulaire.

3. Sonde (10) selon l'une des revendications précédentes,
**caractérisée en ce que**
le dispositif de centrage (50) comporte des bras incurvés.

4. Sonde (10) selon l'une des revendications précédentes,
**caractérisée en ce que**
le moyen de travail (30) est un dispositif d'application, en particulier une brosse d'application.

5. Sonde (1) selon l'une des revendications précédentes,
**caractérisée en ce que**
le moyen de travail (30', 30") est un dispositif de nettoyage, en particulier une tête de brosse ou un ensemble de papier abrasif ou une turbine à chaîne ou un foret à lames ou un foret à pales ou une tête de coupe ou une tête de fraisage.

6. Sonde (10) selon l'une des revendications précédentes,
**caractérisée en ce que**
le moyen de travail (30, 30', 30") est relié directement à l'arbre moteur (18) ou est relié indirectement à l'arbre moteur (18) au moyen d'une articulation, en particulier au moyen d'une articulation à rotule ou d'un ressort.

7. Sonde (10) selon l'une des revendications précédentes,
**caractérisée en ce que**
le dispositif de connexion (40) est conçu comme un connecteur à fiches ou comme un ressort spiral muni d'une pièce de raccordement ou comme une articulation, en particulier une articulation à rotule.

8. Sonde (10) selon l'une des revendications précédentes,
**caractérisée en ce que**
la sonde (10) comprend un capteur de température et/ou une caméra.

9. Sonde (10) selon l'une des revendications précédentes,
**caractérisée en ce que**
la sonde (10) comprend un mélangeur statique (80), de préférence fixé au dispositif de centrage (50).

10. Système (60) comprenant une sonde (10) selon l'une des revendications 1 à 9 et un câble (75).

11. Système (60) selon la revendication 10,
**caractérisé en ce que**
le système (60) comprend un touret (70) dans lequel est logé le câble (75), en particulier un câble de poussée.

12. Système (60) selon la revendication 10 ou 11,
**caractérisé en ce que**
le système (60) comprend une unité de commande (71) disposée de préférence dans ou sur un boîtier du touret (70).
